# EUROPÄISCHE PATENTANMELDUNG

(11) **EP 3 096 161 A1**
(43) Veröffentlichungstag der Anmeldung: **23.11.2016**
(21) Anmeldenummer: 16164357.2
(22) Anmeldetag: 08.04.2016
(51) Int. Cl.: G01S 15/93, G01S 7/52, G01S 7/527

(54) **VERFAHREN ZUM ERKENNEN VON DAUERSTÖRERN UND/ODER FREMDSCHALLSTÖRERN UND ENTSPRECHENDE VORRICHTUNG**

(30) Priorität: 21.05.2015 DE 102015209282
(71) Anmelder: ROBERT BOSCH GMBH, 70442 Stuttgart (DE)
(72) Erfinder: Schmid, Dirk, 75397 Simmozheim (DE); Mayer, Philipp, 70176 Stuttgart (DE); Schumann, Michael, 70597 Stuttgart (DE)

(57) **Zusammenfassung**

Die vorliegende Erfindung betrifft ein Verfahren zum Erkennen von Dauerstörern und/oder Fremdschallstörern anhand einer Auswertung eines Empfangssignals eines an einem Fahrzeug anbringbaren Ultraschallsensors. Der Ultraschallsensor ist dazu ausgebildet, das Empfangssignal aus wenigstens einem von diesem während eines Messzyklus empfangenen Ultraschallsignal zu erzeugen. Das Verfahren umfasst folgende Schritte:
Bestimmen eines Rauschpegels (RP2) eines mittels des Empfangssignals erzeugten Messsignals (MS2) anhand einer Auswertung einer Signalstärke oder
einer Amplitude des Messsignals (MS2), die während eines in dem Messzyklus liegenden vordefinierten Zeitraumes vorkommt, und
Erkennen von Dauerstörern und/oder Fremdschallstörern anhand einer Auswertung des bestimmten Rauschpegels (RP2).

## Beschreibung

Die vorliegende Erfindung betrifft ein Verfahren zum Erkennen von Dauerstörern und/oder Fremdschallstörern anhand einer Auswertung eines Empfangssignals eines an einem Fahrzeug angebrachten Ultraschallsensors. Auch betrifft die Erfindung eine entsprechende Vorrichtung zum Erkennen von Dauerstörern und/oder Fremdschallstörern.

### Stand der Technik

Aus dem Stand der Technik sind Fahrerassistenz-Systeme für Fahrzeuge bekannt, die Fahrerassistenz-Funktionen bereitstellen, die auf einer Auswertung von Empfangssignalen von Ultraschallsensoren basieren. Ein solches Fahrerassistenz-System ist beispielsweise die klassische Einparkhilfe. Fahrerassistenz-Funktionen, die von einer solchen Einparkhilfe bereitstellbar sind, werden zunehmend mit komplexeren Fahrerassistenz-Funktionen ergänzt. Solche komplexere Fahrerassistenz-Funktionen können beispielsweise eine Ausparkunterstützung und ein autonomes Einparken eines Fahrzeuges mit einer entsprechenden Einparkhilfe gewährleisten, bei der ein automatisches Eingreifen in eine Längs- und Querführung des entsprechenden Fahrzeugs erfolgt. Solche komplexere Fahrerassistenz-Funktionen können ferner auch ein automatisches Eingreifen in Bremsvorgänge gewährleisten, die während eines Manövrierens des entsprechenden Fahrzeuges bei niedrigen Geschwindigkeiten erfolgen.

Aufgrund der zunehmenden Sicherheitsaspekte der zuvor genannten Fahrerassistenz-Funktionen, ist es von großer Bedeutung, Ultraschallsignale, die von Dauerstörern und/oder Fremdschallstörern erzeugt werden, zu erkennen und aus den auszuwertenden Empfangssignalen der zuvor genannten Ultraschallsensoren herauszufiltern. Unter einem Dauerstörer und/oder einem Fremdschallstörer wird hier jeweils ein sich in einer unmittelbaren Umgebung der zuvor genannten Ultraschallsensoren befindliches Objekt verstanden, das zumindest während eines Messzyklus dauerhaft Ultraschallsignale erzeugt und ausstrahlt. Dauerstörer können beispielsweise elektronische Vorschaltgeräte oder Lichtmaschinen von aktuell an dem Verkehr teilnehmenden Fahrzeugen sein.

Aus dem Dokument DE 10 2012 202 975 A1 ist ein Verfahren zur Umfelderkennung mittels mindestens eines insbesondere als Ultraschallsensor ausgebildeten Abstandssensors bekannt, bei dem ein Aussenden mindestens eines Impulses mit einem definierten Sendespektrum und ein Empfangen wenigstens eines Signals in einem Messzyklus erfolgen. Ferner erfolgt bei dem Verfahren ein Klassifizieren jedes empfangenen Signals als Echosignal oder als Störsignal. Dabei wird basierend auf einer Amplitude und einer Phaseninformation eines mittels des Abstandssensors aus dem wenigstens einen empfangenen Signals erzeugten Empfangssignals eine Plausibilitätsprüfung durchgeführt. Bei dem Verfahren wird durch ein Verarbeiten der Amplitude und/oder der Phaseninformation des Empfangssignals ein Fremdschallstörer erkannt und eine Entfernung des Abstandssensors von dem Fremdschallstörer geschätzt. Dasselbe Dokument beschreibt ferner ein Fahrassistenzsystem zur Durchführung des beschriebenen Verfahrens.

### Offenbarung der Erfindung

Erfindungsgemäß wird ein Verfahren zum Erkennen von Dauerstörern und/oder Fremdschallstörern anhand einer Auswertung eines Empfangssignals eines an einem Fahrzeug anbringbaren Ultraschallsensors bereitgestellt. Dabei ist der Ultraschallsensor dazu ausgebildet, das Empfangssignal aus wenigstens einem von diesem während eines Messzyklus empfangenen Ultraschallsignal zu erzeugen. Das erfindungsgemäße Verfahren umfasst einen ersten Schritt eines Bestimmens eines Rauschpegels eines mittels des Empfangssignals erzeugten Messsignals anhand einer Auswertung einer Signalstärke oder einer Amplitude des Messsignals, die während eines in dem Messzyklus liegenden vordefinierten Zeitraumes vorkommt. Das erfindungsgemäße Verfahren umfasst ferner einen zweiten Schritt eines Erkennens von Dauerstörern und/oder Fremdschallstörern anhand einer Auswertung des bestimmten Rauschpegels.

Die Unteransprüche zeigen bevorzugte Weiterbildungen der Erfindung.

Bei dem erfindungsgemäßen Verfahren liegt der vordefinierte Zeitraum bevorzugt vor einem Ende des Messzyklus.

Bei einem zuvor beschriebenen Verfahren liegt der vordefinierte Zeitraum bevorzugt unmittelbar am Ende des Messzyklus und/oder endet weiter bevorzugt gleichzeitig mit dem Messzyklus.

Der erste Schritt umfasst bevorzugt ferner ein Bestimmen des Rauschpegels des Messsignals durch Bilden eines Mittelwertes oder eines Medianwertes der während des vordefinierten Zeitraumes vorkommenden Signalstärke oder Amplitude des Messsignals.

Der zweite Schritt umfasst bevorzugt ein Erkennen von Dauerstörern und/oder Fremdschallstörern, wenn der bestimmte Rauschpegel über einem Referenz-Rauschpegel liegt.

Ein zuvor beschriebenes Verfahren umfasst bevorzugt einen dritten Schritt eines Erzeugens des Messsignals durch Anwenden einer Filterung auf das Empfangssignal.

Vorteilhaft bei der Erfindung ist, dass ein zuvor genanntes Verfahren eine robuste Erkennung von Dauerstörern und/oder Fremdschallstörern gewährleistet. Ultraschallsignale, die von erkannten Dauerstörern und/oder Fremdschallstörern erzeugt und mittels des Ultraschallsensors empfangen werden, können dann bevorzugt aus dem Empfangssignal des Ultraschallsensors herausgefiltert werden. Dadurch wird erreicht, dass, wenn der Ultraschallsensor an dem Fahrzeug angebracht ist, Fahrerassistenz-Funktionen eines Fahrerassistenz-Systems des Fahrzeuges, die auf einer Auswertung von Empfangssignalen des Ultraschallsensors basieren, seltener eine Degradierung aufweisen beziehungsweise seltener ausfallen. Dadurch wird eine höhere Verfügbarkeit des Fahrzeugassistenz-Systems gewährleistet.

Bei einem zuvor beschriebenen Verfahren werden bevorzugt ein vierter Schritt und ein fünfter Schritt durchgeführt. Der vierte Schritt umfasst ein Bestimmen eines auf ein Objekt bezogenen und von einem Abstand zwischen dem Objekt und dem Ultraschallsensor abhängigen Objektamplitudenverlaufes. Dabei umfasst der Objektamplitudenverlauf zu erwartende Amplitudenwerte von Objektamplituden, die jeweils beim Empfang eines von dem Ultraschallsensor ausgesendeten und an dem Objekt reflektierten Ultraschallsignals von dem Messsignal in Abwesenheit von Dauerstörern und/oder Fremdschallstörern angenommen werden würden. Der fünfte Schritt umfasst ein Bestimmen eines auf das Objekt bezogenen Reichweitenverlustes des Ultraschallsensors anhand eines Vergleiches zwischen dem bestimmten Rauschpegel und dem bestimmten Objektamplitudenverlauf.

Es kann vorgesehen sein, dass mehrere jeweils auf ein anderes Objekt bezogene Reichweitenverluste des Ultraschallsensors bestimmt werden.

Dadurch wird erreicht, dass, wenn der Ultraschallsensor an dem Fahrzeug angebracht ist, eine Degradierung der zuvor genannten Fahrerassistenz-Funktionen des Fahrzeugassistenz-Systems mittels des einen oder der mehreren bestimmten Reichweitenverluste des Ultraschallsensors festgestellt werden kann.

Ein zuvor beschriebenes Verfahren kann bevorzugt für einen jeden Ultraschallsensor einer Sensorgruppe, die wenigstens einen oder alle an dem Fahrzeug anbringbaren oder angebrachten Ultraschallsensoren umfasst, durchgeführt werden.

Ferner kann für jeden Sensor der Sensorgruppe ein zuvor beschriebenes Verfahren bevorzugt für einen jeden Messzyklus von mehreren Messzyklen durchgeführt werden.

Ein weiterer Aspekt der Erfindung betrifft eine Vorrichtung zum Erkennen von Dauerstörern und/oder Fremdschallstörern, die dazu ausgebildet ist, eine Auswertung eines Empfangssignals eines an einem Fahrzeug anbringbaren Ultraschallsensors durchzuführen. Dabei ist der Ultraschallsensor dazu ausgebildet, das Empfangssignal aus wenigstens einem von diesem während eines Messzyklus empfangenen Ultraschallsignal zu erzeugen. Die Vorrichtung weist wenigstens einen Filter auf und ist dazu ausgebildet, zum Erkennen von Dauerstörern und/oder Fremdschallstörern ein Messsignal, das mit dem mittels des wenigstens einen Filters gefilterten Empfangssignal übereinstimmt, gemäß einem zuvor beschriebenen Verfahren auszuwerten.

Die zuvor beschriebene Vorrichtung ist bevorzugt dazu ausgebildet, ein zuvor beschriebenes Verfahren für einen jeden Ultraschallsensor einer Sensorgruppe, die wenigstens einen oder alle an dem Fahrzeug anbringbaren oder angebrachten Ultraschallsensoren umfasst, durchzuführen.

Eine zuvor beschriebene Vorrichtung ist bevorzugt dazu ausgebildet, für jeden Ultraschallsensor der Sensorgruppe ein zuvor beschriebenes Verfahren für einen jeden Messzyklus von mehreren Messzyklen durchzuführen.

Ein anderer Aspekt der Erfindung betrifft ein Fahrerassistenz-System für ein Fahrzeug mit einer zuvor beschriebenen Vorrichtung und wenigstens einem an dem Fahrzeug anbringbaren Ultraschallsensor.

### Kurze Beschreibung der Zeichnungen

Nachfolgend werden Ausführungsbeispiele der Erfindung unter Bezugnahme auf die begleitenden Zeichnungen im Detail beschrieben. Für gleiche Komponenten und Parameter werden jeweils gleiche Bezugszeichen verwendet. Jede Komponente und jeder Parameter werden jeweils einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente oder der entsprechende Parameter wiederholt vorkommt, bezieht. In den Zeichnungen ist:

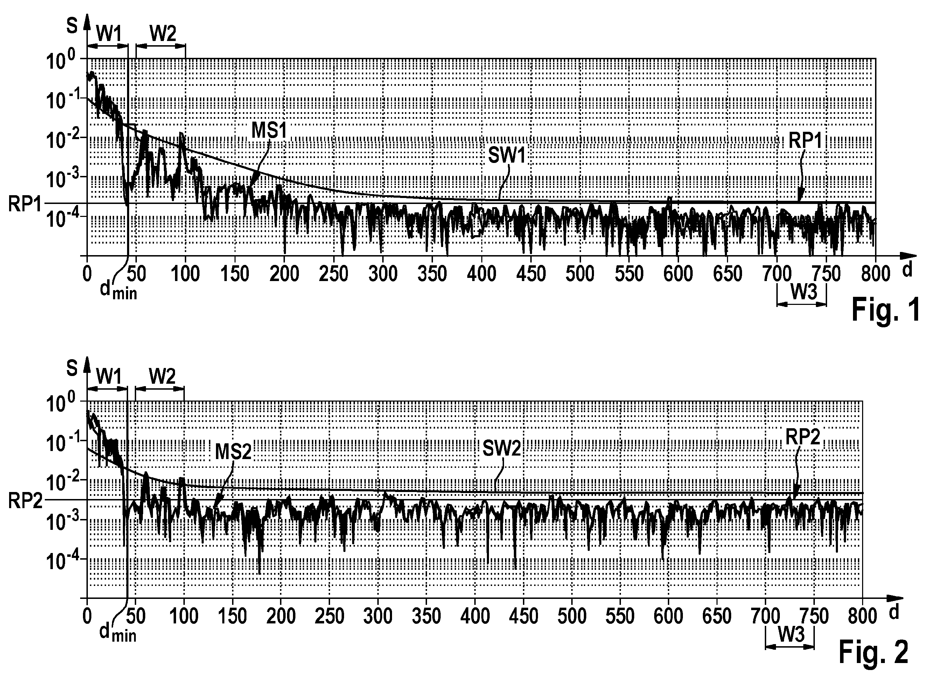

- Figur 1: ein Verlauf einer Signalstärke eines ersten Messsignals, das aus einem ersten Empfangssignal eines an einem Fahrzeug anbringbaren Ultraschallsensors erzeugt wird und einen Rauschpegel aufweist, der bei einer ersten Messung bestimmt, auch als Referenz-Rauschpegel bezeichnet und bei einer gemäß einer ersten Ausführungsform der Erfindung durchzuführenden Erkennung eines Dauerstörers verwendet wird,
- Figur 2: ein Verlauf einer Signalstärke eines zweiten Messsignals, das aus einem zweiten Empfangssignal eines an einem Fahrzeug angebrachten Ultraschallsensors erzeugt wird und einen Rauschpegel aufweist, der bei einer zweiten Messung bestimmt, auch als Lärm-Pegel bezeichnet und bei der gemäß der ersten Ausführungsform der Erfindung durchzuführenden Erkennung des Dauerstörers verwendet wird, und

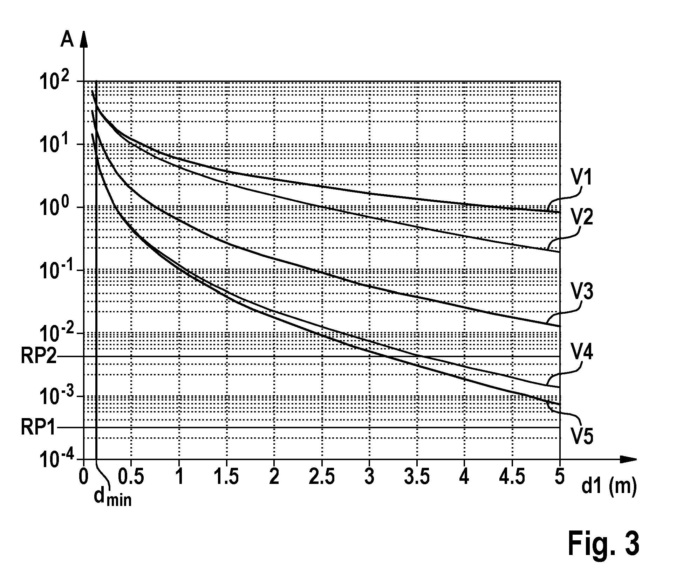

- Figur 3: mehrere auf ein jeweils anderes Objekt bezogene Objektamplitudenverläufe, die jeweils bei einem gemäß der ersten Ausführungsform der Erfindung durchzuführenden Bestimmens eines auf das entsprechende Objekt bezogenen Reichweitenverlustes des Ultraschallsensors verwendet werden.

### Ausführungsformen der Erfindung

Eine gemäß einer ersten Ausführungsform der Erfindung durchzuführende Erkennung eines Dauerstörers wird zunächst in Zusammenhang mit einer ersten Messung und einer zweiten Messung und den Figuren 1 und 2 beschrieben.

Figur 1 zeigt einen Verlauf einer Signalstärke eines ersten Messsignals MS1, das aus einem während eines ersten Messzyklus vorkommenden ersten Empfangssignal eines an einem Fahrzeug anbringbaren Ultraschallsensors erzeugt wird, in Abhängigkeit von einem Abstand zu dem Ultraschallsensor.

Während des ersten Messzyklus ist kein Dauerstörer und/oder Fremdschallstörer vorhanden. Unter einem Dauerstörer und/oder einem Fremdschallstörer wird hier jeweils ein sich in einer unmittelbare Umgebung der Ultraschallsensors befindliches Objekt verstanden, das zumindest während eines Messzyklus dauerhaft Ultraschallsignale erzeugt und ausstrahlt. Während des ersten Messzyklus befinden sich in der unmittelbaren Umgebung des Ultraschallsensors nur reflektierende Objekte, die Ultraschallsignale reflektieren aber nicht selber erzeugen.

Figur 2 zeigt einen Verlauf einer Signalstärke eines zweiten Messsignals MS2, das aus einem während eines zweiten Messzyklus vorkommenden zweiten Empfangssignal des Ultraschallsensors erzeugt wird, in Abhängigkeit von dem Abstand zu dem Ultraschallsensor.

In den Figuren 1 und 2 wird eine Achse, die einheitslose Werte umfasst, die die jeweils mittels einer vordefinierten Normierungsgröße normierten Signalstärken der Messsignale MS1, MS2 jeweils aufweisen kann, mit S bezeichnet. In den Figuren 1 und 2 wird ferner eine weitere Achse, die in Zentimetern angegebene Abstandswerte umfasst, die der Abstand zum Ultraschallsensor aufweisen kann, mit d bezeichnet.

Während des zweiten Messzyklus ist ein Dauerstörer vorhanden, der während des zweiten Messzyklus ein Ultraschallsignal in Form einer kontinuierlichen Schallwelle ausstrahlt. Während des zweiten Messzyklus befinden sich in der unmittelbaren Umgebung des Ultraschallsensors die reflektierenden Objekte, die sich auch während des ersten Messzyklus in der unmittelbaren Umgebung des Ultraschallsensors befanden und Ultraschallsignale reflektieren, aber nicht selber erzeugen.

Jedes während eines der zwei Messzyklen vorkommende Empfangssignal des Ultraschallsensors wird mittels des Ultraschallsensors aus Ultraschallsignalen erzeugt, die von diesem während des entsprechenden Messzyklus empfangenen werden. Dabei wird jedes Messsignal MS1, MS2 aus dem entsprechenden Empfangssignal durch Anwenden einer Filterung auf das entsprechende Empfangssignal erzeugt. Das bedeutet, dass jedes Messsignal MS1, MS2 mit dem entsprechenden gefilterten Empfangssignal übereinstimmt. Während jedes Messzyklus wird mittels des Ultraschallsensors ein erstes Ultraschallsignal ausgesendet. Dabei wird jedes erste Ultraschallsignal während eines ersten vordefinierten Zeitraumes ausgesendet, der unmittelbar nach einem Beginn des entsprechenden Messzyklus liegt. Während jedes Messzyklus werden mittels des Ultraschallsensors ferner Ultraschallsignale empfangen, die durch Reflektion des entsprechenden ersten Ultraschallsignals an den reflektierenden Objekten entstanden sind. Während jedes Messzyklus werden mittels des Ultraschallsensors auch Ultraschallsignale in Form von Rauschsignalen empfangen. Die während des zweiten Messzyklus empfangenen Rauschsignale umfassen auch das während des zweiten Messzyklus von dem Dauerstörer ausgestrahlte Ultraschallsignal.

Die Abhängigkeit der zwei Messsignale MS1, MS2 von dem Abstand zum Ultraschallsensor ist äquivalent mit einer Abhängigkeit der zwei Messsignale MS1, MS2 von einer von dem Beginn des entsprechenden Messzyklus ablaufenden Zeit. Dabei entspricht ein jeder während eines der zwei Messzyklen vorkommender Abstandswert des Abstandes zum Ultraschallsensor einem diesem zugeordneten Zeitwert der zuvor eingeführten Zeit. Dabei ergibt sich das Zweifache jedes Abstandswertes als Produkt zwischen dem diesem zugeordneten Zeitwert und der Schallgeschwindigkeit. Folglich entspricht der erste vordefinierte Zeitraum jedes Messzyklus einem wie zuvor beschrieben zu berechnenden ersten Abstandswertebereich W1 des Abstandes zum Ultraschallsensor.

In den Figuren 1 und 2 ist eine minimale Reichweite dmin des Ultraschallsensors jeweils an einem Ende des ersten Abstandwertebereichs W1 eingetragen.

Ferner wird die Signalstärke des ersten Messsignals MS1 mit einem ersten Schwellenwert SW1 und die Signalstärke des zweiten Messsignal MS2 mit einem zweiten Schwellenwert SW2 verglichen.

Ein Empfang eines jeden Ultraschallsignals, das jeweils durch Reflektion des ersten Ultraschallsignals an einem der reflektierenden Objekten entstanden ist, wird während jedes Messzyklus jeweils bei Vorliegen einer Signalstärke des entsprechenden Messsignals MS1, MS2 erkannt, die den entsprechenden Schwellenwert SW1, SW2 überschreitet. Ein Empfang eines jeden Raussignals wird während jedes Messzyklus jeweils erkannt, beispielsweise bei Vorliegen einer Signalstärke des entsprechenden Messsignals MS1, MS2, die den entsprechenden Schwellenwert SW1, SW2 unterschreitet.

Aus den Figuren 1 und 2 ist jeweils ersichtlich, dass während jedes Messzyklus zwei Ultraschallsignale empfangen werden, die jeweils durch Reflektion des ersten Ultraschallsignals an einem der reflektierenden Objekte entstanden sind. Ein Zeitraum jedes Messzyklus, während dessen die zwei Ultraschallsignale empfangen werden, entspricht einem wie zuvor beschrieben zu berechnenden zweiten Abstandswertebereich W2 des Abstands zum Ultraschallsensor.

Weiterhin wird für jeden Messzyklus ein Rauschpegel RP1, RP2 des entsprechenden Messsignals MS1, MS2 anhand einer Auswertung einer Signalstärke oder einer Amplitude des entsprechenden Messsignals MS1, MS2 bestimmt, die während eines vor einem Ende des entsprechenden Messzyklus liegenden zweiten vordefinierten Zeitraumes vorkommt. Der zweite vordefinierte Zeitraum jedes Messzyklus entspricht einem wie zuvor beschrieben zu berechnenden dritten Abstandswertebereich W3 des Abstandes zum Ultraschallsensor. Der bestimmte Rauschpegel RP1 des ersten Messsignals MS1 wird auch als Referenz-Rauschpegel RP1 bezeichnet. Bei der ersten Messung wird der Rauschpegel RP1 des ersten Messsignals MS1 durch Bilden eines Mittelwertes oder eines Medianwertes der während des vordefinierten Zeitraumes des ersten Messzyklus vorkommenden Signalstärke oder Amplitude des ersten Messsignals MS1 bestimmt. Bei der zweiten Messung wird der Rauschpegel RP2 des zweiten Messsignals MS2 durch Bilden eines Mittelwertes oder eines Medianwertes der während des zweiten vordefinierten Zeitraumes des zweiten Messzyklus vorkommenden Signalstärke oder Amplitude des zweiten Messsignals MS2 bestimmt.

Bei einer gemäß der ersten Ausführungsform der Erfindung durchzuführenden Erkennung des während des zweiten Messzyklus vorhandenen Dauerstörers wird der bestimmte Rauschpegel RP2 des zweiten Messsignals MS2 mit dem Referenz-Rauschpegel RP1 verglichen. Aus den Figuren 1 und 2 ist ersichtlich, das der bestimmte Rauschpegel RP2 des zweiten Messsignals MS2 über dem Referenz-Rauschpegel RP1 liegt. Schlussfolgernd macht sich der während des zweiten Messzyklus vorhandene Dauerstörer dadurch bemerkbar, dass der bestimmte Rauschpegel RP2 des zweiten Messsignals MS2 größer als der Referenz-Rauschpegel RP1 ist.

Figur 3 zeigt einen auf ein erstes Objekt bezogenen und von einem Abstand zwischen dem ersten Objekt und dem Ultraschallsensor abhängigen ersten Objektamplitudenverlauf V1 und einen auf ein zweites Objekt bezogenen und von einem Abstand zwischen dem zweiten Objekt und dem Ultraschallsensor abhängigen zweiten Objektamplitudenverlauf V2. Das erste Objekt und das zweite Objekt sind zwei unterschiedlich ausgebildete Wände.

Figur 3 zeigt ferner einen auf ein drittes Objekt bezogenen und von einem Abstand zwischen dem dritten Objekt und dem Ultraschallsensor abhängigen dritten Objektamplitudenverlauf V3. Das dritte Objekt ist ein Rohr.

Figur 3 zeigt auch einen auf ein viertes Objekt bezogenen und von einem Abstand zwischen dem vierten Objekt und dem Ultraschallsensor abhängigen vierten Objektamplitudenverlauf V4 und einen auf ein fünftes Objekt bezogenen und von einem Abstand zwischen dem fünftes Objekt und dem Ultraschallsensor abhängigen fünften Objektamplitudenverlauf V5. Das vierte Objekt und das fünfte Objekt sind zwei unterschiedlich ausgebildete Kugeln.

Jeder auf ein Objekt bezogene Objektamplitudenverlauf V1, V2, V3, V4, V5 umfasst zu erwartende Amplitudenwerte von Objektamplituden, die jeweils beim Empfang des an dem entsprechenden Objekt reflektierten ersten Ultraschallsignals von dem ersten Messsignal MS1 beziehungsweise von dem zweiten Messsignal MS2 in Abwesenheit des zuvor genannten Dauerstörers angenommen werden würden.

In der Figur 3 wird eine Achse, die einheitslose Werte umfasst, die die zuvor genannten und jeweils mittels der zuvor genannten vordefinierten Normierungsgröße normierten Objektamplituden jeweils aufweisen können, mit A bezeichnet. In der Figur 3 wird eine weitere Achse, die in Metern angegebene Abstandswerte umfasst, die der Abstand zwischen jedem der fünf Objekte und dem Ultraschallsensor aufweisen kann, mit d1 bezeichnet. In der Figur 3 ist auch die minimale Reichweite dmin des Ultraschallsensors eingetragen.

Gemäß der ersten Ausführungsform der Erfindung wird für jedes der fünf Objekte ein auf das entsprechende Objekt bezogener Reichweitenverlust des Ultraschallsensors anhand eines Vergleiches zwischen dem bestimmten Rauschpegel RP2 des zweiten Messsignals MS2 und dem auf das entsprechende Objekt bezogenen Objektamplitudenverlauf V1, V2, V3, V4, V5 bestimmt.

In der Figur 3 sind sowohl der Referenz-Rauschpegel RP1 als auch der bestimmte Rauschpegel RP2 des zweiten Messsignals MS2 eingetragen.

Aus der Figur 3 ist ersichtlich, dass während des ersten Messzyklus, das heißt, in Abwesenheit des zuvor genannten Dauerstörers, der Ultraschallsensor eine maximale Reichweite von über 5 m für alle fünf Objekte aufweist. Aus der Figur 3 ist ferner ersichtlich, dass während des zweiten Messzyklus, das heißt, in Anwesenheit des zuvor genannten Dauerstörers, der Ultraschallsensor eine maximale Reichweite von über 5 m nur noch für das erste, zweite und das dritte Objekt aufweist. Aus der Figur 3 ist auch ersichtlich, dass der Ultraschallsensor während des zweiten Messzyklus nur noch eine maximale Reichweite von weniger als 3,5 m für das vierte und das fünfte Objekt aufweist.

Neben der voranstehenden schriftlichen Offenbarung wird hiermit zur weiteren Offenbarung der Erfindung ergänzend auf die Darstellung in den Figuren 1 bis 3 Bezug genommen.

## Patentansprüche

1. Verfahren zum Erkennen von Dauerstörern und/oder Fremdschallstörern anhand einer Auswertung eines Empfangssignals eines an einem Fahrzeug anbringbaren Ultraschallsensors, der dazu ausgebildet ist, das Empfangssignal aus wenigstens einem von diesem während eines Messzyklus empfangenen Ultraschallsignal zu erzeugen, **gekennzeichnet durch**:
Bestimmen eines Rauschpegels (RP2) eines mittels des Empfangssignals erzeugten Messsignals (MS2) anhand einer Auswertung einer Signalstärke oder einer Amplitude des Messsignals (MS2), die während eines in dem Messzyklus liegenden vordefinierten Zeitraumes vorkommt, und
Erkennen von Dauerstörern und/oder Fremdschallstörern anhand einer Auswertung des bestimmten Rauschpegels (RP2).

2. Verfahren nach Anspruch 1, **gekennzeichnet durch**:
Erzeugen des Messsignals (MS2) **durch** Anwenden einer Filterung auf das Empfangssignal.

3. Verfahren nach einem der Ansprüche 1 oder 2, **gekennzeichnet durch**:
Bestimmen des Rauschpegels (RP2) des Messsignals (MS2) **durch** Bilden eines Mittelwerts oder eines Medianwerts der während des vordefinierten Zeitraumes vorkommenden Signalstärke oder Amplitude des Messsignals (MS2).

4. Verfahren nach einem der vorangehenden Ansprüche, **gekennzeichnet durch**:
Erkennen von Dauerstörern und/oder Fremdschallstörern, wenn der bestimmte Rauschpegel (RP2) über einem Referenz-Rauschpegel (RP1) liegt.

5. Verfahren nach einem der vorangehenden Ansprüche, **gekennzeichnet durch**:
Bestimmen eines auf ein Objekt bezogenen und von einem Abstand zwischen dem Objekt und dem Ultraschallsensor abhängigen Objektamplitudenverlaufes (V1, V2, V3, V4, V5), der zu erwartende Amplitudenwerte von Objektamplituden umfasst, die jeweils beim Empfang eines von dem Ultraschallsensor ausgesendeten und an dem Objekt reflektierten Ultraschallsignals von dem Messsignal (MS2) in Abwesenheit von Dauerstörern und/oder Fremdschallstörern angenommen werden würden, und
Bestimmen eines auf das Objekt bezogenen Reichweitenverlustes des Ultraschallsensors anhand eines Vergleiches zwischen dem bestimmten Rauschpegel (RP2) und dem bestimmten Objektamplitudenverlauf (V1, V2, V3, V4, V5).

6. Vorrichtung zum Erkennen von Dauerstörern und/oder Fremdschallstörern, die dazu ausgebildet ist, eine Auswertung eines Empfangssignals eines an einem Fahrzeug anbringbaren Ultraschallsensors durchzuführen, wobei der Ultraschallsensor dazu ausgebildet ist, das Empfangssignal aus wenigstens einem von diesem während eines Messzyklus empfangenen Ultraschallsignal zu erzeugen, **dadurch gekennzeichnet, dass** die Vorrichtung wenigstens einen Filter aufweist und dazu ausgebildet ist, ein Messsignal (MS2), das mit dem mittels des wenigstens eines Filters gefiltertes Empfangssignal übereinstimmt, gemäß einem der vorangehenden Ansprüche zum Erkennen von Dauerstörer und/oder Fremdschallstörer auszuwerten.
